Europäisches Patentamt

European Patent Office

Office européen des brevets

(11) Publication number: **0 338 569**
**A2**

## (12) EUROPEAN PATENT APPLICATION

(21) Application number: **89107161.5**

(22) Date of filing: **20.04.89**

(51) Int. Cl.⁴: **B22F 9/16 , C25B 1/00**

(30) Priority: **21.04.88 PL 272042**

(43) Date of publication of application:
**25.10.89 Bulletin 89/43**

(84) Designated Contracting States:
**DE FR GB IT SE**

(71) Applicant: **INSTYTUT METALURGII ZELAZA IM. STANISLAWA STASZICA**
**ul. Karola Miarki 12**
**PL-44-101 Gliwice(PL)**

(72) Inventor: **Kulinski, Zdzislaw**
**ul. Czajki 13/28**
**PL-44-100 Gliwice(PL)**
Inventor: **Mitka, Boleslaw**
**ul. Saloniego 16**
**PL-40-705 Katowice(PL)**
Inventor: **Godek, Jerzy**
**ul. Zeromskiego 10**
**PL-57-200 Zabkowice Slaskie(PL)**
Inventor: **Gladala, Krzysztof**
**ul. Gwardii Ludowej 2E/6**
**PL-44-224 Knurów(PL)**
Inventor: **Czarnik, Jan**
**ul. Orzeszkowej 11/47**
**PL-43-100 Tychy(PL)**
Inventor: **Prajsnar, Tadeusz**
**ul. Perkoza 8/20**
**PL-44-114 Gliwice(PL)**
Inventor: **Bulkowski, Lech**
**ul. Ml. Patriotów 2/25**
**PL-44-100 Gliwice(PL)**

(74) Representative: **Schrimpf, Robert et al**
**Cabinet Regimbeau 26, Avenue Kléber**
**F-75116 Paris(FR)**

(54) **Method of disintegration of ferroalloys.**

(57) This invention relates to a method of disintegration of ferroalloys to powder form with grain size below 3 mm and particularly for disintegration of complex ferroalloys to be used for an afterfurnace treatment of liquid steel in a ladle, as well as for other non-metallurgical purposes, wherein a charge in the form of lumped ferroalloy with the piece size above 3 mm and preferably from 3 up to 20 mm is subjected to the action of a hydrogen ion field during the electrolysis of water which contains a small addition of easily dissociating salts. During electrolysis, ferroalloy is being hydrided to such a concentration of ions and/or atoms in the alloy that it undergoes a gradual multi-directional brittle hydrogen cracking thus obtaining a powder with grain size usually below 2 mm, with the amount of undersize particles smaller than 0,075 mm below 10 percent and with the amount of oversize particles greater than 2 mm below 50 percent, which if required, is further disintegrated by delayed hydrogen cracking in a con-ditioning operation.

## METHOD OF DISINTEGRATION OF FERROALLOYS

This invention relates to a method of disintegration of ferroalloys used for metallurgical purposes, and particularly complex ferroalloys used for afterfurnace treatment of liquid steel, as well as ferroalloys used for extrametallurgical purposes and especially for production of coatings for welding electrodes.

Contemporary steel metallurgy is featured with an ever wider use of afterfurnace treatment of liquid steel consisting in its intensive deoxidation, desulphurization and, if necessary, siliconization and modification of inclusions by introduction of pulverized complex ferroalloys into liquid metal in the ladle. These ferroalloys apart from iron contain at least two from the following alloying elements : calcium, silicon, aluminium, manganese, chromium, titanium, boron, cerium, or elements from the group of the alkali metals, most widely used in the afterfurnace treatment being Fe-Ca-Si and Fe-Ca-Si-Al, as well as Fe-Si-Al, Fe-Mn-Al, Fe-Al-Mn-Si, Fe-Mn-Si-Al-Ca and Fe-Si-Al-Cr.

Introduction of ferroalloys into liquid steel in afterfurnace treatment gives good results only when they have been pulverized to a grain size below 2,0 mm. wherein because of the powder feeding and producing methods optimum powder grain size is 1,5 mm to 0,075 mm. Complex ferroalloy powders are introduced into liquid steel in a ladle by being blown-in through a lance by means of carrier gas stream, such as argon or nitrogen, or by continuous feeding of powder wire, called also core wire, said wire having a core made of powdered additive and a surrounding armour made as a wound tube of thin steel strip. Should the ferroalloy powder deviate considerably from the optimum grain size, then flow pulsation and/or clogging of conduits of the blowing system take place when it is blown into the bath by means of a lance and carrier gas. When a powder of non-optimum grain size is used, production of good core wire is not possible, since with the presence of a considerable amount of oversize particles of grain size above 1,5 mm or, particularly with the presence of considerable amount of under size particles of grain size below 0,075 mm, powder does not flow in a uniform way from the feeder onto the trough formed of the steel strip being closed continuously so as to form an armouring tube. This leads in consequence to voids in the core, or to a not fully closed armour tube and, consequently, to improper quality of wire.

Moreover, ferroalloy powders with grain size below 0,075 mm and particularly powders of ferroalloys which contain calcium, aluminium and manganese, are explosive and for this reason the amount of undersize particles in the powder used for afterfurnace treatment of liquid steel should not exceed 10 per cent.

This recommendation also applies to ferroalloys used for production of coatings f r welding electrodes, where optimum powder grain size ranges from 0,45 up to 0,6 mm.

Ferroalloys are usually powdered by mechanical disintegration in various crushers and ball or conical mills and other similar devices, whose common feature is a considerable power consumption and noxiousness for environment because of noise and considerable dustiness. Still another method consists in saturation of ferroalloys with hydrogen at high pressure in an atmosphere of gaseous hydrogen, which leads in effect to disintegration of ferroalloys becoming powdered. As an example of such method there may be cited the solution according to patent application filed in Japan under N° 60-63304 in class B22G 9/04//9/00 and H016 1/06 published on August 20th, 1985. However, the method disclosed in the above mentioned patent application has only limited applicability, because of the necessity of carrying out the process under high pressure conditions and because of difficult working conditions of pressure chambers.

This invention has been aimed at development of such a method of disintegration of lumped complex ferroalloys to powder form, which would eliminate noxiousness and inconveniences of the methods known from the art.

According to this invention, a charge in the form of lumped ferroalloy with grain size above 3 mm is placed in an electrolytic field of hydrogen ions produced between an anode and a cathode in an aqueous solution of electrolyte and subjected to hydriding with water electrolysis parameters such that the lumped ferroalloy is gradually disintegrated to the form of a powder with irregular grain shape by gradual multidirectional brittle cracking, said ferroalloy being maintained in a hydrogen ion field for a time during which at least part of the lumped ferroalloy has been disintegrated and has formed a powder, which is next separated from electrolyte and conditioned in a wet state with exposure to air. During that conditioning further delayed hydrogen cracking of major grains takes place and, particularly, oversize particles are being disintegrated thus forming smaller particles with the required grain size and the percentage of powder with the required grain size is growing. Powder thus obtained is next dried and sieved in order to divide the powder into fraction of needed grain size, oversized fraction and undersized fraction. In the described method, water solutions with low percentage of salts easily dissociating in water and giving preferably neutral reaction are used as aqueous electrolyte solutions.

Conditioning after electrolysis is used in the case when the percentage of insufficiently disintegrated pieces of ferroalloy after disintegration of the charge is too great.

Disintegration of lumped ferroalloy to powder form is explained by the known phenomenon of electrolysis of water with production of field hydrogen ions which, when flowing uninterruptedly to cathode, meet on their way lumped ferroalloy with many lattice and structural defects, thus causing its diffusive saturation with ionic and/or atomic hydrogen. This hydrogen in lattice defects, voids and at the boundaries of ferroalloy grains either recombines into particles of considerable greater volume than that of atomic hydrogen, or as an intensive reducing agent enters into chemical reactions with alloy components and particularly with oxides located in considerable amounts at the boundaries of grains, thus giving non-univocally defined reduction products whose volume exceeds considerably the volume of the reaction substrates. This leads in effect to increased internal stresses in ferroalloy which exceed the cohesion forces of its crystalline structure, whose final result is the phenomenon of delayed hydrogen cracking of lumped ferroalloy to powder form. As a result of that process, a simple, safe and effective way of production of powdered ferroalloy with the required grain size is obtained.

The method of disintegration of ferroalloys according to this invention will be explained in detail on two examples of embodiment. The first of these examples relates to production of powdered calcium-silicon with grain size from 1,5 to 0,075 mm, with up to 10 per cent of oversize particles above 2 mm and 10 per cent of undersize particles. The second example relates to production of calcium-silicon-aluminium with grain size from 1,0 to 0,075 mm with 10 per cent of oversize particles and 10 per cent of undersize particles.

Example I

Calcium-silicon with grain size from 1,5 to 0,075 mm to be used for production of core wire has been produced according to the invention in such a way that the charge in the form of lumped calcium-silicon with the lump size from 5 up to 20 mm has been placed in an electrolyser in the space between electrodes filled with 0,5 per cent sodium chloride aqueous solution so that the thickness of the charge layer was about 100 mm and the electrolyte level was higher by dozens of milimeters than the charge level, said electrolyser being supplied with direct current of intensity corresponding to a current density at the cathode from 0,02 up to 0,2 A/cm$^2$, with the voltage ranging within the limits from 10 up to 70v. Under these current conditions water electrolysis has been effected with the simultaneous hydriding of ferroalloy with hydrogen within about 2 hours. After that time the external electrolyser supply source has been disconnected, electrolyte has been decanted, the obtained powder has been removed from the electrolyser and the remaining part of not fully disintegrated lumped ferroalloy has been removed from electrolyser and next subjected to conditioning on pallets in a layer of thickness from about 20 up to 30 mm at ambient temperature and moistened periodically with water. During conditioning, further disintegration of ferroalloy took place caused by the phenomenon of delayed hydrogen cracking. This process practically disappeared after 12 to 24 hours. Both the powder produced in electrolyser, as well as the products obtained after conditioning have been dried at a temperature of 300° C and next sieved in a screening device provided with a set of sieves with mesh 1,6 and 0,075 mm. As a result of sieving, calcium-silicon powder with grain size from 1,5 to 0,075 mm has been obtained with about 8 per cent of undersize particles.

The percentage of powder with the required grain size was from 70 up to 90 percent as referred to the amount of the charge, of which 40 to 70 percent has been powdered in electrolyser and 60 to 30 percent has been obtained due to disintegration after conditioning.

Example II

Calcium-silicon-aluminium powder with grain size from 1,0 to 0,075 mm for afterfurnace treatment of liquid steel in a ladle by argon blowing-in method with the use of a lance has been produced in such a way that a charge in the form of calcium-silicon-aluminium with pieces ranging in size from 20 to 5 mm has been placed in an electrolyser in the space between the electrodes filled with 8 percent solution of NaCl so that the thickness of the charge ranged within the limits from 80 up to 120 mm and the electrolyte level was higher by minimum 20 mm than the charge level, said electrolyser being supplied with direct current of intensity corresponding to a current density from 0,02 up to 0,2A/cm$^2$ at the cathode, with voltage ranging within the limits from 10 up to 70V and under the current conditions presented above. Water electrolysis was effected with a simultaneous hydriding of ferroalloy with hydrogen for 0,5 to 1,5 hours. During the above mentioned hydriding, the lumped ferroalloy was disintegrated into powder of grain size below 2,0 mm caused by the phenomenon of a delayed hydrogen cracking of the alloy. After diconnection of supply current and after decanting of electrolyte, the powdered ferroalloy was removed from electrolyser and dried up at a temperature from 150 up to 200° C. The powder thus obtained was next sieved through sieves with the mesh size so suited as to obtain powder of the required fraction from 1,0 to 0,075 mm, oversize particles and undersize particles, the ratios of the required, oversize and undersize fractions being 82, 10 and 8 percent respectively.

Other ferroalloys used for production of coatings for welding electrodes and afterfurnace treatment of liquid steel can also be disintegrated in a similar way as described above by choosing according to the chemical composition of the alloy and its other physical and chemical properties the respective electrolysis parameters and the sequence of the finishing operations according to the principles of this invention.

An advantage of the method of disintegration of ferroalloys according to this invention is that it ensures the highest quality for the produced powders at very low production costs and safe working conditions of the operators of the manufacturing plant.

## Claims

1. Method of disintegration of ferroalloys, and particularly complex ones, used for the needs of an afterfurnace treatment of liquid steel, as well as ferroalloys used for other metallurgical and non metallurgical purposes, for example for production of coatings for welding electrodes, comprising : providing a charge in the form of lumped ferroalloy with lump size above 3 mm, usually from 5 to 20 mm, obtained in an arbitrary way, in this mechanical crushing, disintegrating said charge into powder with grain size below 3 mm by acting on said charge with hydrogen, characterized by placing the charge in the form of lumped ferroalloy with grain size above 3 mm into an electrolytic field of hydrogen ions produced between an anode and a cathode, where the lumped ferroalloy undergoes a gradual multidirectional brittle hydrogen cracking thus obtaining the form of a powder with grains of an irregular shape, maintaining said ferroalloy in the field of hydrogen ions for a time during which at least part of the amount of the lumped ferroalloy has been powdered, next separating said powder from electrolyte and subjecting the powder to conditioning in a wet state with exposure to air, further delayed hydrogen cracking of major grains taking place during said conditioning and particularly oversize particles being then disintegrated into smaller ones and the percentage of powder with the required grain size being increased and next subjecting, the powder thus obtained to drying and sieving for separation of the powder into the required, oversize and undersize fractions.

2. The method of disintegration of ferroalloys according to Claim 1, characterized in that an aqueous solution with low percentage of salts easily dissociating in water and giving essentially neutral reaction are used as aqueous electrolyte solution.